# EUROPEAN PATENT SPECIFICATION

(11) **EP 2 918 401 B1**
(45) Date of publication and mention of the grant of the patent: **27.11.2024**
(21) Application number: 14158530.7
(22) Date of filing: 10.03.2014
(51) Int. Cl.: B29C 70/50, B29C 70/54, B29C 70/20, B29D 99/00, B29C 70/44, B29L 31/08

(54) **A NON-STITCHED FIBER MATERIAL, A METHOD AND AN APPARATUS**
NICHT ABGESTEPPTES FASERMATERIAL, VERFAHREN UND VORRICHTUNG
MATÉRIAU DE FIBRE NON-PIQUÉE, PROCÉDÉ ET APPAREIL

(43) Date of publication of application: 16.09.2015
(73) Proprietor: Siemens Gamesa Renewable Energy A/S, 7330 Brande (DK)
(72) Inventor: Grove-Nielsen, Erik, 7870 Roslev (DK)
(74) Representative: SGRE-Association

(56) References cited:
- EP-A1- 2 123 431
- EP-B1- 2 123 431
- WO-A1-01/21877
- WO-A1-2013/040618
- CH-A- 441 727
- DE-A1- 19 534 627
- GB-A- 2 153 866
- US-A- 3 686 048
- US-A1- 2009 114 337

## Description

The present invention relates to a method for manufacturing a component for a wind turbine

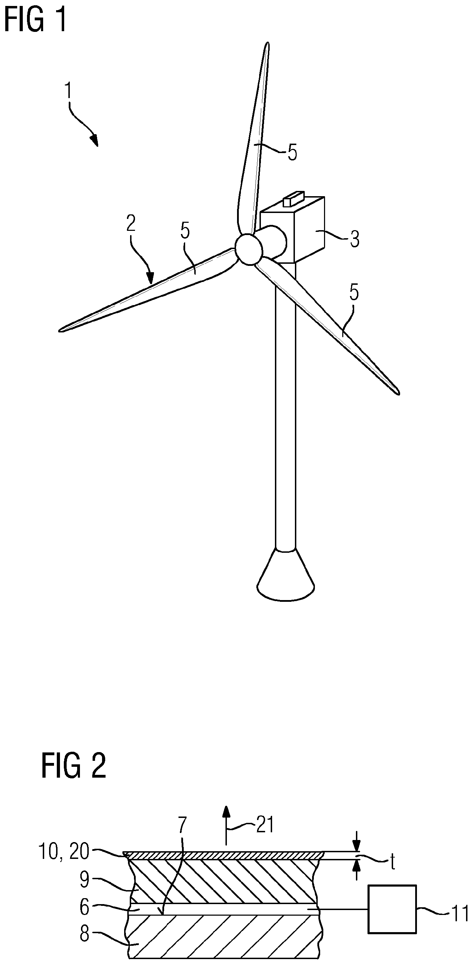

An example of a known wind turbine 1 is shown in Fig. 1. The wind turbine 1 comprises a rotor 2 connected to a generator (not shown) arranged inside a nacelle 3. The nacelle 3 is arranged at the upper end of a tower 4 of the wind turbine 1. The rotor 2 comprises three blades 5. Rotors 2 of this kind may have diameters ranging from, for example, 30 to 160 meters. The blades 5 are subjected to high wind loads. At the same time, the blades 5 need to be lightweight. For these reasons, blades 5 in modern wind turbines 1 are manufactured from fiber-reinforced composite materials. Therein, glass fibers are generally preferred over carbon fibers for cost reasons. In addition, the blades 5 each comprise one or more core members of a light material to reduce the weight of the blades.

For example, EP 2 123 431 A1 describes a method for manufacturing a rotor blade 5 using a vacuum-assisted resin transfer molding (VARTM)-process. This process is partially illustrated in Fig. 2 showing a section view.

In a first step of the manufacturing process, a vacuum distribution layer 6 is laid onto a mold surface 7 of a mold 8. The mold 8 may be a lower part of a closed mold 8, the upper part of the mold 8 not being shown in Fig. 2.

In a further step, a layup 9 of fiber material is arranged on top of the vacuum distribution layer 6.

Then, a layer of non-woven fiber glass material 10 is laid on top of the layup 9. The fiber glass material 10 has a lower air permeability than the layup 9.

The vacuum distribution layer 6 is connected to a vacuum pump 11. As the layers 9, 10 are being arranged on the mold 8, the vacuum ensures that said layers 9, 10 are firmly positioned against the mold 8. Thus, especially in cases where the mold 8 has deeply concave shapes, the vacuum ensures that the layers 9, 10 follow the actual curvature of the mold 8. Thus, a phenomenon called "hovering glass" is prevented.

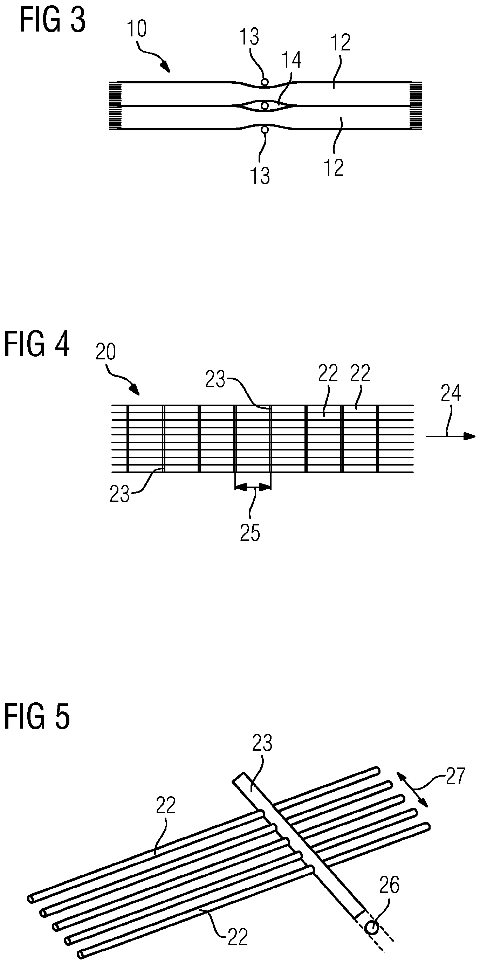

Fig. 3 shows a portion of the non-woven fiber glass material 10 used in the process of Fig. 2.

The non-woven glass fiber material 10 comprises a plurality of glass fiber rovings 12 held together by a stitching yarn 13. The stitching yarn 13 causes local constrictions or deformations of a respective roving 12 resulting in cavities or openings 14 formed between the rovings 12.

When the vacuum is applied as shown in Fig. 2, air flows through the openings 14 shown in Fig. 3. Hence, the vacuum that can be generated underneath the layer 10 in order to force the layup 9 against the mold 8 may not be sufficient for some applications.

CH 441 727 A describes a non-stitched fiber material with unidirectional arranged first fibers being bonded to second fibers that are arranged perpendicular to the first fibers.

US 3,686,048 A describes a fiber material with fibers that are arranged parallel and which are interconnected by resin bridges.

WO 01/21877 A1 describes a non-woven warp yarn fabric material with a plurality of yarns that are substantially parallel and equally spaced apart.

US 2009/0114337 A1 describes a method for producing parts based on composite materials. The method makes use of a vacuum bag which is arranged on a fiber layup to press it against a mold.

One objective of the present invention is to provide an improved method for manufacturing a component for a wind turbine.

A method according to the present invention includes the features of claim 1.

Accordingly, a non-stitched fiber material configured tc produce a pressure drop sufficient to force a layup of fiber material against a mold surface when vacuum is applied to the space between the non-stitched fiber material and the mold surface is provided. The non-stitched fiber material comprises a plurality of fibers bonded together by an adhesive to improve the air tightness of the non-stitched fiber material, wherein openings or cavities between adjacent fibers are avoided, such that it is configured to produce the pressure drop sufficient to force the layup of fiber material against the mold surface when vacuum is applied to the space between the non-stitched fiber material and the mold surface. The fibers are arranged in an airtight or closely airtight manner next to one another on the layup. The adhesive takes the shape of at least one bead bonding the fibers together, wherein the at least one bead has a zigzag shape.

The fiber material is advantageous in that by bonding the fibers together rather than using a stitching yarn, openings or cavities between adjacent fibers are avoided. This in turn improves the air tightness of the fiber material allowing a greater pressure drop to be generated across said fiber material.

"Fibers bonded together by an adhesive" in particular comprises embodiments where the adhesive directly connects individual fibers to each other, as well as embodiments where the adhesive bonds a respective fiber to a support layer, the fibers thus being connected to each other by the adhesive as well as the support layer.

The fibers of the non-stitched fiber material may comprise glass fibers, carbon fibers and/or aramid fibers, for example. The term "fibers" used herein encompasses, preferably, fibers, rovings and/or fiber filaments.

The adhesive of the non-stitched fiber material is in a cured or hardened state. This is to say that molecular chains within the adhesive are fully cross-linked or cross-linked to an extent where the shape of the adhesive will not or not significantly change any more.

By "to produce a pressure drop sufficient to force a layup of fiber material against a mold surface" it is meant that the force produced will prevent phenomena like "hovering glass" or similar phenomena where the layup or fiber material is not following the curvature of the mold surface to a desired extent. In some examples, the force produced by the pressure drop may be sufficient to turn the mold, for example, the mold 8 of Fig. 2 by 180°, the force holding the layup against the mold surface counteracting gravity.

According to the invention the fibers are parallel to each other.

This simplifies producing the non-stitched fiber material in a continuous process.

The adhesive takes the shape of at least one bead bonding the fibers together.

Applying a bead to the fibers may be automated easily. The term "bead" herein, preferably, also encompasses a strip, a string or a band. The bead may have, for example, a circular, square or rectangular cross-section. The length of the bead is at least 2, preferably 5 and more preferably 10 times its diameter (in the case of a circular cross-section) or its diagonal (in the case of a square or rectangular cross-section).

According to the disclosure, the at least one bead is arranged crosswise with respect to the lengthwise direction of the fibers.

In particular, the bead may extend perpendicularly to a respective fiber. Herein, "perpendicularly" preferably includes angles between the bead and a respective fiber of 90° ± 45°, more preferably 90° ± 10°, and even more preferably 90° ± 5°.

According to the disclosure, multiple beads are provided and arranged parallel to each other.

Two respective beads may be spaced from each other by a distance of 10 - 200 mm, for example.

According to the invention the at least one bead has a zigzag shape. "Zigzag shape" herein is also to include an "S"-shape.

According to the disclosure, the non-stitched fiber material comprises a support layer, the fibers being bonded by the adhesive to the support layer.

For example, the support layer may be a mesh of fiber material, fiber felt or fiber fabric.

According to the disclosure, the support layer is an adhesive tape.

A self-adhesive mesh tape is preferred, in particular.

According to a further embodiment, the adhesive comprises a resin.

Examples of a resin which may be used are epoxy, polyester, vinylester or any other suitable thermoplastic or duroplastic material. Instead, the adhesive may also comprise a glue.

According to a further embodiment, the pressure drop produced across the thickness of the non-stitched fiber material at a through flow of air of, preferably, 480 m³/h is larger than 5 mbar, preferably 10 mbar and more preferably 20 mbar.

A pressure drop of this kind will be sufficient to lift a layup of fiber material having an area density of 200 kg/m². This ensures a secure lift as this would be 10 times the weight of a typical layup of fiber material.

According to a further embodiment, the non-stitched fiber material has an area density of 1200 - 9600 g/m².

Preferred area densities may range from 1200 - 4000 g/m².

These values particularly apply when the fibers of the non-stitched fiber material are glass fibers.

Further, a method for manufacturing a component for a wind turbine is provided, according to the features of claim 1.

According to the disclosure, fibers or bundles of fibers are laid next to one another on top of the layup of fiber material while vacuum is applied to the layup of fiber material. Thus, the vacuum maintains the position of the fibers. Thus, this represents a further method of producing a non-stitched fiber material.

In both embodiments described above, the fibers or bundles of fibers may be placed with a robot onto the layup of fiber material.

The fiber material used for the layup may comprise fiber material of different shapes and composition. For example, the fiber material may comprise a layup of fibers, rovings, a fiber mat, a fiber fabric, woven fibers or a fiber felt. The fibers may be arranged unidirectionally, in a biax-configuration or in any other configuration. The fibers may comprise glass fibers, carbon fibers and/or aramid fibers, for example. Preferably, the layup of fiber material is arranged on top of the mold surface in a dry, i.e. unimpregnated state. Yet, in other embodiments, the layup of fiber material may be provided in a at least partially wetted, i.e. pre-impregnated state (so-called prepreg material).

Step c) may be followed by a vacuum bag being arranged on top of the non-stitched fiber material and resin being injected into the space between the vacuum bag and the mold surface. After the resin has set or has been cured - typically by the addition of external heat - the vacuum bag and/or mold is removed and the final component is obtained. Of course, when using a prepreg material, there is no need to inject the fiber material with resin.

Generally speaking, the mold may be an open or a closed mold. For example, the mold may comprise one or more parts, in particular a lower part and an upper part.

"Cured" or "set" refers to the resin being hardened and/or cross-linked to an extent where a shape of the resin including the fiber material will not or not significantly change any more.

Examples of a resin which may be used for impregnating the layup of fiber material are epoxy, polyester, vinylester or any other suitable thermoplastic or duroplastic material.

The term "layup" is to be understood as one or more layers of fiber material. The fiber material can be of a shape and a configuration as described in the above.

"a)", "b)" and "c)" are not to imply a fixed order of the method steps. Rather, the steps a) - c) may be carried out in a different order where appropriate in the mind of the skilled person.

According to a further embodiment, the mold having the mold surface is turned by 180°, the non-stitched fiber material holding the layup against the mold surface counteracting gravity.

Furthermore, an apparatus for manufacturing a non-stitched fiber material is provided. The non-stitched fiber material has the features described above, in particular. The apparatus comprises a feeding unit and an application unit. The feeding unit is configured to, preferably continuously, feed the fibers to the application unit and the application is configured to, preferably, continuously apply the adhesive to the fibers for bonding the fibers together.

According to the disclosure, the apparatus comprises a heating unit for curing the adhesive, the heating unit being configured as a rotating drum.

The rotating drum continuously or certain areas of the rotating drum intermittently contact the fibers including the adhesive. Thus, heat is transferred from the rotating drum to the adhesive. The heat transferred cures the adhesive in order to permanently bond the fibers together.

"Wind turbine" presently refers to an apparatus converting the wind's kinetic energy into rotational energy, which may again be converted to electrical energy by the apparatus.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention, as defined by the claims.

Further objects, features and advantages of the present invention become apparent from the subsequent description and the pending claims, taken in conjunction with the accompanying drawings, in which:
Fig. 1 is a perspective view of a conventional wind turbine;
Fig. 2 shows a sectional view from a conventional process;
Fig. 3 shows an enlarged view from Fig. 2;
Fig. 4 shows in a top view a non-stitched fiber material which does not fall within the scope of the claims;
Fig. 5 shows an enlarged perspective view from Fig. 4;
Fig. 6 shows a top view of a non-stitched fiber material
Fig. 7 shows in a top view a non-stitched fiber material which does not fall within the scope of the claims;
Fig. 8 shows in a perspective view a support layer used in the embodiment of Fig. 7;
Fig. 9 shows a cross-section IX-IX;
Fig. 10 shows in a perspective view a process of producing a non-stitched fiber material which does not fall within the scope of the claims;
Fig. 11 shows in a top view an apparatus for manufacturing a non-stitched fiber material which does not fall within the scope of the claims;
Fig. 12 shows the apparatus of Fig. 11 in a side view; and
Fig. 13 shows a flow diagram of a process according to an embodiment.

Fig. 4 shows a top view of a non-stitched fiber material 20 to be used instead of the fiber material 10 in the process illustrated in Fig. 2, for example. Even though explained herein after with reference to the embodiment of Fig. 2, the non-stitched fiber material 20 may be used in any other manufacturing process for manufacturing a component, in particular a rotor blade 5 (Fig. 1).

The non-stitched fiber material 20 is configured to produce a pressure drop sufficient to force the layup 9 of fiber material against the mold surface 8 when vacuum is applied to the space between the non-stitched fiber material 20 and the mold surface 7. The pressure drop across the thickness t of the non-stitched fiber material 20 is preferably larger than 20 mbar at a through flow of air of 480 m³/h in the direction 21 normal to the surface of the non-stitched fiber material 20 as shown in Fig. 2. This kind of pressure drop will be sufficient to prevent "hovering glass" as explained in the introductory section above. Further, this kind of pressure will be sufficient to hold the layup 9 firmly against the mold surface 7 when the mold 8 is turned by a 180° such that gravity tends to pull the layup 9 away from the mold surface 7. Thus, the pressure drop is sufficient to counteract gravity. In one embodiment, the layup 9 may have an area density of 200 kg/m². Even in this case, the pressure drop will be sufficient to maintain close contact between the fiber layup 9 and the mold surface 7 (via the vacuum distribution layer 6 in cases where a vacuum distribution layer 6 is used).

As shown in Fig. 4, the non-stitched fiber material 20 comprises a plurality of fibers 22 arranged parallel to each other (so-called unidirectional orientation). The fibers 22 are bonded together by an adhesive. In this particular case, the adhesive takes the shape of a plurality of parallel beads 23 of cured resin. The beads 23 may be arranged crosswise with respect to the fibers 22, thus extending at an angle with 90° with respect to the fibers 22.

The beads 23 are spaced apart from each other in the lengthwise direction 24 of the fibers 22. In particular, a distance 25 between adjacent beads may range between 10 and 200 mm, for example 100 mm in the present embodiment.

The fibers 22 may, for example, be configured as glass fibers with an area density ranging from 1200 - 9600 g/m². In this particular case the area density may be 1200 g/m².

Fig. 5 illustrates an enlarged perspective view from Fig. 4.

Fig. 5 illustrates a bead 23 having a circular cross-section 26, for example. However, the cross-section 26 may also be of a rectangular or square shape. The bead 23 may be produced, in particular, by moving a nozzle in the crosswise direction 27 of the fibers 22, the nozzle (not shown) depositing the bead material on the fibers 22. Once cured, the bead 23 firmly connects the fibers 22. In the example of Figs. 4 and 5, the fibers 22 are directly connected to one another by a respective bead 23.

Thus, the mold surface 20 - having no stitches - does not have openings 14 and is therefore more airtight than some conventional fiber materials 10. In particular, the non-stitched fiber material 20 has a lower air permeability than the layup 9.

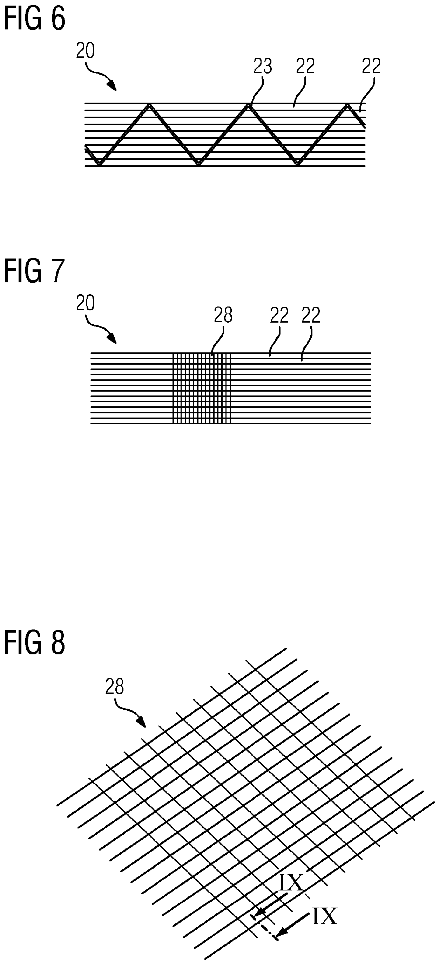

Fig. 6 illustrates in a top view a non-stitched fiber material 20.

The non-stitched fiber material 20 has a single bead 23 having a zigzag shape and connecting individual fibers 22 to each other. Instead of the zigzag shape, the bead 23 may also have an "S"-shape.

Fig. 7 illustrates a top view of a non-stitched fiber material 20.

The non-stitched fiber material 20 comprises parallel fibers 22. A support element configured as a self-adhesive glass mesh tape 28 is bonded to the fibers 22.

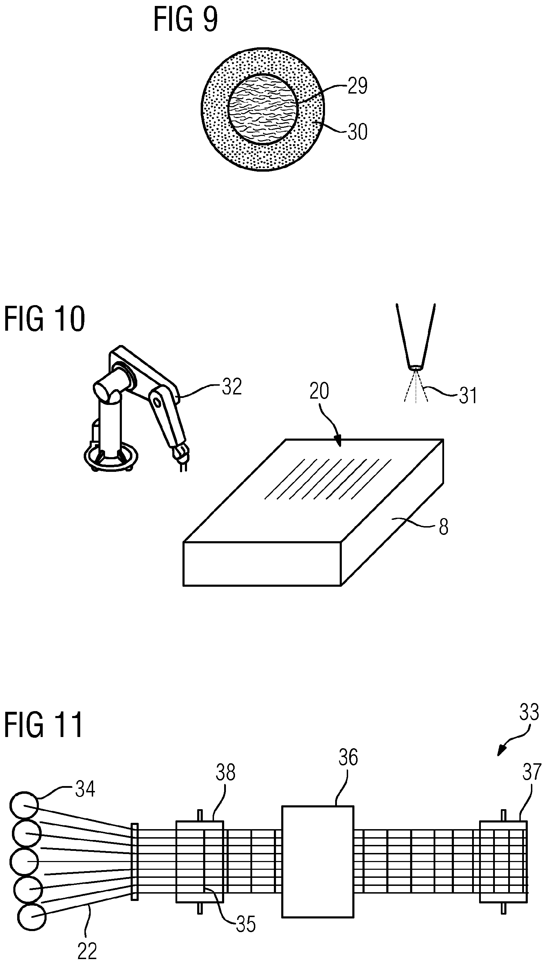

The mesh 28 is shown in more detail in a perspective view in Fig. 8. The mesh tape 28 comprises a mesh of fibers 29 each coated in adhesive 30, for example resin, as illustrated in the cross-sectional view of Fig. 9. The fibers 29 may, for example, be configured as glass fibers.

Fig. 10 illustrates a process of manufacturing a non-stitched fiber material 20.

According to the disclosure the layup 9 of Fig. 2 is sprayed with a hot melt 31. The hot melt 31 is a glue or resin, for example. While the hot melt 31 is still soft, a robot 32 arranges fibers 22 or bundles of fibers next to one another on the hot melt 31. The fibers 21 are positioned in such close relationship that a non-stitched fiber material 20 of low air permeability is produced as explained with reference to Fig. 4 in the above.

According to the disclosure instead of the hot melt 31, vacuum is applied to the layup 9 in Fig. 2, for example via the vacuum pump 11. As the robot 32 deposits fibers or fiber bundles 22 on the layup 9, the vacuum secures the fibers 22 or fiber bundles in close relationship to each other. Thus, a non-stitched fiber material 20 having a low air permeability as described above is obtained.

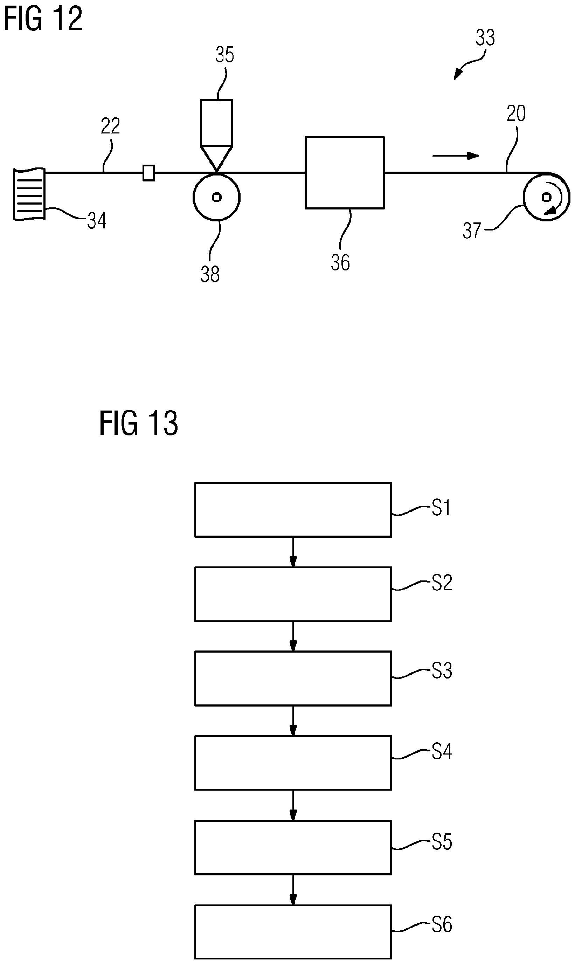

Fig. 11 illustrates a top view of an apparatus 33 for manufacturing the non-stitched fiber material 20 described with reference to Figs. 4 - 7 in the above. Fig. 12 shows the apparatus 33 of Fig. 11 in a side view.

The apparatus 33 comprises a feed unit 34, an application unit 35, a heating unit 36 and a storage unit 37.

The feeding unit 34 is, for example, configured as multiple bobbins with fiber materials or rovings. The fibers 22 are fed from the feeding unit 34 to the application unit 35. The application unit 35 applies the beads 23 to the fibers 22. For example, the application unit 35 may comprise a nozzle moving crosswise with respect to the length of fibers to deposit a respective bead 23 on the fibers 22.

Optionally, a rotating drum 38 may be provided supporting the fibers 22 as the beads 23 are deposited.

After the application unit 35, there is a heating unit 36 provided. The heating unit 36 is configured for curing the beads 23 (resin).

The storage unit 37 may be configured as a drum for winding up the finished non-stitched fiber material 20.

In one embodiment, the heating unit 36 is integrated into the drum 38. As the drum rotates 38, the area in contact with the fibers and beads 23 transfers sufficient heat to cure the beads 23.

Thus, a process of manufacturing the non-stitched fiber material 20 in a continuous process is provided. This is beneficial to a high degree of automation.

Last, a flow diagram of an embodiment of a method for manufacturing a rotor blade 5 for a wind turbine 1 is illustrated.

Again, reference is made to Fig. 2 for illustration purposes only.

In a first step S1, a layup 9 of fiber material is arranged on top of a mold surface 7. Optionally, a vacuum distribution layer 6 is laid on the mold surface 7 beforehand.

In a step S2, the layup 9 is covered with a non-stitched fiber material 20 as explained above.

In another preferred embodiment, the vacuum distribution layer 6 is arranged on top of the layup 9, i.e. between the non-stitched fiber material 20 and the layup 9.

In a step S3, a vacuum is applied to the space between the non-stitched fiber material 20 and the mold surface 7. The non-stitched fiber material 20 thus forces the layup 9 of fiber material against the mold surface 7.

In a step S4, the mold 8 may be turned by 180°, the layup 9 thus facing downwards. The non-stitched fiber material 20 will hold the layup 9 against the mold 8 due to the applied vacuum.

In a step S5, a web (not shown) or a core member of the blade 5 is arranged on top of the non-stitched fiber material 20, for example.

In a step S6, the non-stitched fiber material 20 and, as the case may be, the web or core member is covered with a vacuum bag (not shown), then vacuum is applied to the space between the vacuum bag and the mold surface 7. Then resin is injected into said space. In a further step, external heat is applied, and the resin is cured.

Now, the mold 8 is opened and the cured blade 5 may be removed from the mold 8.

## Claims

1. A method for manufacturing a component (5) for a wind turbine (1), in particular a rotor blade (5), comprising the steps of
a) arranging (S1) a layup (9) of fiber material on top of a mold surface (7),
b) covering (S2) the layup (9) with a non-stitched fiber material (20) comprising a plurality of fibers (22) bonded together by an adhesive (23, 30) to improve the air tightness of the non-stitched fiber material (20), wherein openings or cavities between adjacent fibers (22) are avoided, such that it is configured to produce a pressure drop sufficient to force a layup (9) of fiber material against a mold surface (7) when vacuum is applied to a space between the non-stitched fiber material (20) and the mold surface (7), wherein the adhesive takes the shape of at least one bead (23) bonding the fibers (22) together, the at least one bead (23) has a zigzag shape, and wherein the non-stitched fiber material (20) comprises fibers (22) being arranged parallel to each other, and
c) applying (S3) a vacuum to a space between the non-stitched fiber material (20) and the mold surface (7), the non-stitched fiber material (20) forcing the layup (9) of fiber material against the mold surface (7).

2. The method of claim 1, wherein a mold (8) having the mold surface (7) is turned by 180°, the non-stitched fiber material (20) holding the layup (9) against the mold surface (7) counteracting gravity.

3. The method of claims 1 or 2, wherein the adhesive (23, 30) comprises a resin.

4. The method of one of the claims 1 to 3, wherein the non-stitched fiber material (20) has an area density of 1200 - 9600 g/m².

## Patentansprüche

1. Verfahren zur Herstellung eines Bauteils (5) für eine Windkraftanlage (1), insbesondere einer Rotorschaufel (5), umfassend die folgenden Schritte:
a) Anordnen (S1) eines Aufbaus (9) aus Fasermaterial auf einer Formoberfläche (7),
b) Abdecken (S2) des Aufbaus (9) mit einem nicht abgesteppten Fasermaterial (20), das eine Vielzahl von Fasern (22) umfasst, die durch einen Klebstoff (23, 30) miteinander verbunden sind, um die Luftdichtigkeit des nicht abgesteppten Fasermaterials (20) zu verbessern, wobei Öffnungen oder Hohlräume zwischen benachbarten Fasern (22) vermieden werden, sodass es konfiguriert ist, einen ausreichenden Druckabfall zu erzeugen, um einen Aufbau (9) aus Fasermaterial gegen eine Formoberfläche (7) zu pressen, wenn ein Vakuum an einen Raum zwischen dem nicht abgesteppten Fasermaterial (20) und der Formoberfläche (7) angelegt wird, wobei der Klebstoff die Form von mindestens einem Strang (23) annimmt, der die Fasern (22) miteinander verbindet, wobei der mindestens eine Strang (23) eine Zickzack-Form aufweist und wobei das nicht abgesteppte Fasermaterial (20) Fasern (22) umfasst, die parallel zueinander angeordnet sind, und
c) Anlegen (S3) eines Vakuums an einen Raum zwischen dem nicht abgesteppten Fasermaterial (20) und der Formoberfläche (7), wobei das nicht abgesteppte Fasermaterial (20) den Aufbau (9) aus Fasermaterial gegen die Formoberfläche (7) presst.

2. Verfahren nach Anspruch 1, wobei eine Form (8), die die Formoberfläche (7) aufweist, um 180° gedreht wird, wobei das nicht abgesteppte Fasermaterial (20) den Aufbau (9) gegen die Schwerkraft an der Formoberfläche (7) hält.

3. Verfahren nach Anspruch 1 oder 2, wobei der Klebstoff (23, 30) ein Harz umfasst.

4. Verfahren nach einem der Ansprüche 1 bis 3, wobei das nicht abgesteppte Fasermaterial (20) eine Flächendichte von 1200 - 9600 g/m² aufweist.

## Revendications

1. Procédé de fabrication d'un composant (5) pour une éolienne (1), en particulier une pale de rotor (5), comprenant les étapes de
a) agencement (S1) d'un empilage (9) de matériau de fibre sur une surface de moule (7),
b) recouvrement (S2) de l'empilage (9) d'un matériau de fibre non cousue (20) comprenant une pluralité de fibres (22) liées ensemble par un adhésif (23, 30) pour améliorer l'étanchéité à l'air du matériau de fibre non cousue (20), dans lequel les ouvertures ou les cavités entre les fibres adjacentes (22) sont évitées, de sorte qu'il soit configuré pour produire une chute de pression suffisante pour forcer un empilage (9) de matériau de fibre contre une surface de moule (7) lorsque le vide est appliqué à un espace entre le matériau de fibre non cousue (20) et la surface de moule (7), dans lequel l'adhésif prend la forme d'au moins un cordon (23) liant les fibres (22) ensemble, l'au moins un cordon (23) a une forme en zigzag, et dans lequel le matériau de fibre non cousue (20) comprend des fibres (22) qui sont agencées parallèlement les unes aux autres, et
c) application (S3) d'un vide à un espace entre le matériau de fibre non cousue (20) et la surface de moule (7), le matériau de fibre non cousue (20) forçant l'empilage (9) de matériau de fibre contre la surface de moule (7).

2. Procédé selon la revendication 1, dans lequel un moule (8) ayant la surface de moule (7) est tourné de 180°, le matériau de fibre non cousue (20) maintenant l'empilage (9) contre la surface de moule (7) en s'opposant à la gravité.

3. Procédé selon les revendications 1 ou 2, dans lequel l'adhésif (23, 30) comprend une résine.

4. Procédé selon l'une des revendications 1 à 3, dans lequel le matériau de fibre non cousue (20) a une densité surfacique allant de 1200 à 9600 g/m².
